Europäisches Patentamt

European Patent Office

Office européen des brevets

(19)

(11) Publication number: **0 168 925**
A1

(12) **EUROPEAN PATENT APPLICATION**

(21) Application number: **85303513.7**

(22) Date of filing: **20.05.85**

(51) Int. Cl.⁴: **B 60 P 7/08,** B 60 T 3/00

(30) Priority: **18.05.84 GB 8412785**

(43) Date of publication of application: **22.01.86**
**Bulletin 86/4**

(84) Designated Contracting States: **AT BE CH DE FR GB IT LI NL SE**

(71) Applicant: **TOLEMAN HOLDING COMPANY LIMITED, Tolman House St. Thomas Road, Brentwood Essex (GB)**

(72) Inventor: **Cooper, Alan Gordon, 11 Hawk Close Whitestone, Numeaton Warwickshire (GB)**

(74) Representative: **Burrows, Anthony Gregory et al, Haseltine Lake & Co. Hazlitt House 28 Southampton Buildings Chancery Lane, London, WC2 1AT (GB)**

(54) **A chock device.**

(57) A chock device (5) for retaining a tyred wheeled vehicle on a perforated track includes a base (6–8) releasably latchable to the track, a stop bar (16) turnable about the base (6–8) into and out of abutment with a tyre (20), and a circular-arc ratchet-and-pawl arrangement (12, 13) for releasably holding the bar (16) in abutment with the tyre (20), the ratchet (12) being fixed to the base (6–8), and the pawl (13) being arranged to move with the bar (16).

<u>"A CHOCK DEVICE"</u>

This invention relates to a chock device for retaining a wheeled vehicle on track, particularly on parallel tracks of a vehicle transporter.

Chock devices for retaining wheeled vehicles on parallel tracks of vehicle transporters are known from French Patent Specification 79,785; British Patent Specification 897,582 and Federal German Patent Specification 940, 203.

The chock device of French Patent Specification 79,785 includes a base shoe which is formed at its underside with corrugations which releasably interengage corrugations in one of the tracks. Mounted on top of the shoe so as to be slidable forwards and rearwards relative to the shoe is a sled on the front of which is pivotally mounted a curved stop plate resting against an upwardly extending abutment at its rear. The abutment is attached to the sled and includes an upper part which can resiliently flex rearwards to allow the upper part of the stop plate to turn rearwards to a limited extent about the pivot. The stop plate is of a radius corresponding to that of the wheel and extends over a significant arc. Fixed inside the shoe is a toothed, linear ratchet having its teeth projecting upwardly and accessible, through a slot in the top of the shoe, to a pawl guidedly mounted in the sled so as to be movable up-and-down out of and into engagement with the ratchet. The pawl is moved up-and-down by means of a bell-crank, double lever which is pivotally mounted on a horizontal axle across the sled. A helical tension spring acting between the sled and the lever urges the lever into a position in which it presses the pawl into the ratchet. The rearmost end of the lever includes a cross-piece serving as a handle for manipulating the lever. The front flanks of the teeth of the ratchet appear to be at right-angles to the line of the ratchet.

In use of the chock device, the vehicle is driven onto the track, and the chock device is placed on the track adjacent a vehicle wheel with its corrugations engaging those of the track. Then the sled is pushed forwards relative to the shoe, causing the stop plate to bear on the wheel, initially with the upper end of the stop plate, the pawl meanwhile riding over the teeth. As the user continues to push the sled, the stop plate is turned about its pivot against the resilient action of the abutment, until the plate is completely bearing on the wheel, so that the sled cannot be pushed further forward, whereupon the user ceases pushing the sled and then the pawl engages with the front flank of a tooth under the resilient action of the abutment. To release the chock device from the wheel, the handle is pressed down to turn the lever against the action of the spring and thus to raise the pawl out of engagement with the ratchet.

That chock device is relatively bulky, with a relatively large number of parts. In particular, to obtain the resilience required to enable the pawl to engage firmly against a front flank of a tooth of the ratchet, the lower part of the plate is pivotally mounted and a resilient abutment is attached to the sled to bear the upper part of the plate. Again in particular, the pawl-operating lever is mounted on a sled which is itself mounted on a shoe. For its retention relative to the track, the device appears to rely upon the interengagement of the corrugations and the positioning effect of the wheel on the plate and on side flaps thereof, but such retention is not fully reliable. Moreover, the employment of a plate, particularly one with side flaps, as the stop member involves considerable risk of buckling of the plate, with malfunctioning of the device and damage to tyres. The abutting of the wheel on the chock device relies upon the engagement of the pawl with a front flank of a tooth of the ratchet, but such engagement is not fully reliable, especially after wear of the front flank of the tooth and/or the rear flank of the pawl during use, when either could become rearwardly oblique relative to the normal to the line of the ratchet, when the pawl could jump out of the ratchet.

The chock device of British Patent Specification 897,582 includes a metal base plate with wheel-retaining barriers along both of its longitudinal sides and with depending studs for engaging holes in a track. Near each end, the base plate has a pivotally mounted, arcuate, stop plate, over which the wheel can be driven into a position in which the wheel presses down on the inner parts of the stop plates to cause the outer parts to rise to embrace the wheel. Then releasable latching bars are introduced outwardly of the stop plates to prevent their return. This device has the disadvantage that it has to be pre-positioned before the vehicle is driven into position, so that if the user has incorrectly judged the wheelbase of the vehicle, it has to be driven off and the device re-positioned.

According to one aspect of the present invention, there is provided a chock device for mounting so as to extend transversely of track means and in the path of a ground wheel of a wheeled vehicle which ground wheel is borne by said track means, said device including a stop member arranged to abut the outer periphery of said ground wheel, a second member so mounting said stop member that said stop member is movable into and out of abutment with said outer periphery while said second member is in a condition fixed relative to said track means, and a ratchet-and-pawl arrangement serving releasably to prevent movement of said stop member away from said outer periphery, characterised in that the stop member is movable into and out of abutment with said outer periphery by turning about an axis, and one part of the ratchet-and-pawl arrangement is arranged to turn about that axis relative to the other part.

Such provision for the stop member and the one part to turn about a common axis enables the device to be relatively compact with relatively fewer parts.

According to a second aspect of the present invention, there is provided a chock device for mounting so as to extend transversely of track means and in the path of a tyre of a ground wheel of a wheeled vehicle which tyre is borne by said track means, said device including a stop member arranged to abut the outer periphery of said tyre and a second member so mounting said stop member that said stop member is movable into and out of abutment with said outer periphery while said second member is in a condition fixed relative to said track means, characterised in that the stop member is a transverse bar.

The use of a bar as the stop member enables malfunctioning and tyre damage by the stop member to be minimized. Moreover, when a ratchet-and-pawl arrangement is used for keeping the stop member in abutment with a tyre, the bar can resiliently depress the tyre sufficiently to give the necessary resilience for the pawl to engage the ratchet firmly.

In order that the invention may be clearly understood and readily carried into effect, reference will now be made, by way of example, to the accompanying drawings, in which:

FIGURE 1 shows a fragmentary perspective view of a motor car being carried by a vehicle transporter,

FIGURE 2 shows an end elevation of a chock device of the transporter,

FIGURE 3 shows a fragmentary, sectional plan view of the chock device,

FIGURE 4 shows another part of the vehicle transporter and incorporating a modified version of the chock device,

FIGURE 5 shows an end elevation of that modified version,

FIGURE 6 shows an end elevation of another modified version of the chock device, and

FIGURE 7 shows a vertical section through a track and a base plate of a further modified version of the chock device and illustrating a system for releasably attaching the device to the track.

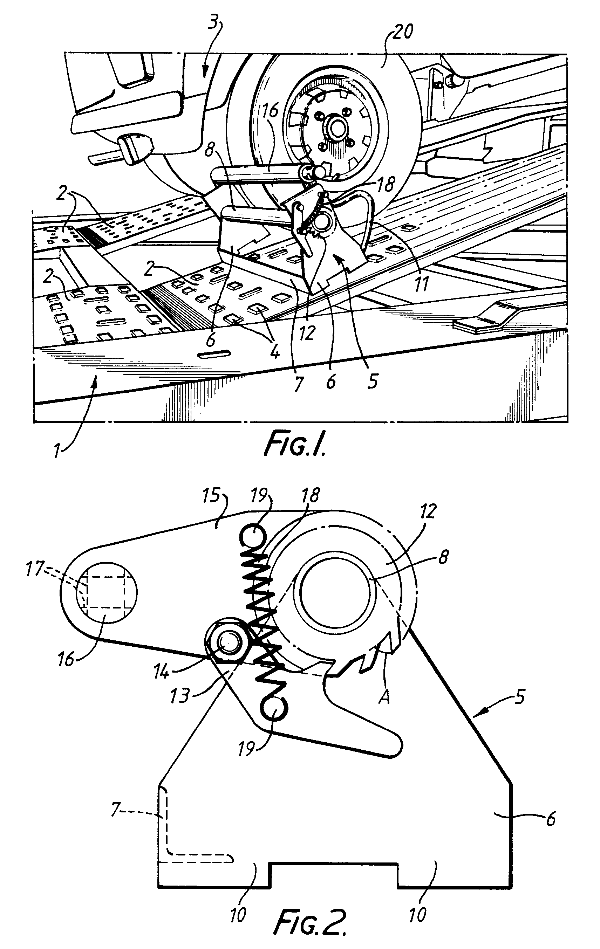

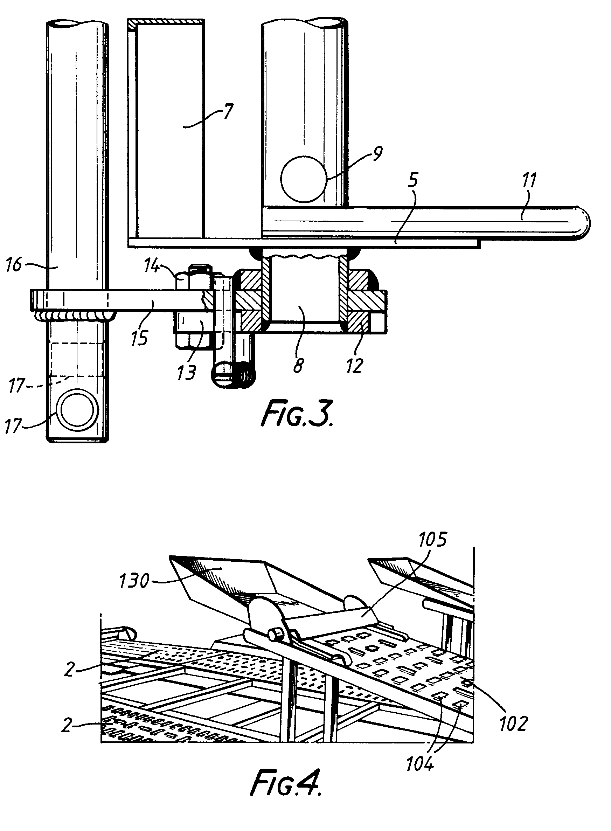

Referring to Figures 1 to 3, the transporter 1 may be in the form of a trailer or of a self-propelled vehicle. It includes a plurality of pairs of tracks 2 along which wheeled vehicles, such as the motor car 3, may be driven. Each track 2 has distributed over it through holes 4, each of an oblong form. In order to retain each vehicle upon its pair of tracks 2 during transportation of that vehicle, the vehicle has its front wheel tyres, its rear wheel tyres, or both, depending upon the angle of inclination of its pair of tracks, abutting against respective chock devices, of which one is shown in Figure 1 and referenced 5. Each chock 5 includes two vertical end plates 6 interconnected by a horizontal, transverse angle iron 7 and a horizontal transverse tube 8, both welded thereto. At each end of the tube 8, the tube has been drilled diametrally at 9 to receive a spring-loaded rod (not shown) which has a bent-over lower end insertable parallelly through any one of the oblong holes 4. Once the lower end of the rod has been inserted through the hole, the rod can be manually turned through $90^{\circ}$ about its own axis to cause its bent-over lower end to engage the underneath surface of the track 2 under the action of its spring, so as to attach the chock device 5 to the track 2. In order to prevent the rod from working itself back through $90^{\circ}$ during use of the transporter, and thus releasing the chock device 5 from the track 2 inadvertently, the rod is formed with a profiled surface which is complementary to the underneath of the tube 8 and which, in the engaged position of the rod, embraces the underneath of the tube 8. To release the rod, it has to be depressed sufficiently against the action of its spring to allow that profiled surface to turn freely relative to the tube 8 about the axis of the rod. Each end plate 6 is provided with front and rear feet 10 which locate in respective holes 4, and the outer end plate 6 has welded thereto a rod-form handle 11 (which has been omitted from Figure 2 for the sake of clarity). Welded to an outer end of the tube 8 is a ratchet ring 12 which co-operates with a pawl 13 which is pivotally mounted at 14 on an arm 15 pivotally mounted on the tube 8 and retained thereon by the ratchet ring 12. At the inner end of the rod 8 is another such arm, but without the ratchet-and-pawl system, that other arm being retained on the tube 8 by a plain ring welded to the inner end of the tube 8. Extending horizontally through respective bores in the radially outer ends of the two arms is a stop bar in the form of a rod 16 which is formed at its outer end thereof with two diametral bores 17 perpendicular to each other and for receiving a tommy bar insertable therein by an operator. The ratchet teeth are arranged along a circular arc which is a part or the whole of a circle co-axial with the tube 8. Moreover, their respective flanks which engage the pawl 13 to hold the rod 16 in abutment with the tyre 20 are each inclined at an acute angle A to that arc, the co-operating flank of the pawl being similarly inclined.

The method of use of the chock device is as follows. The motor car 3 is driven up the pair of tracks 2 on which it stands in Figure 1 and its hand brake is applied to hold the car 3 in a desired position. Then a chock device 5 is releasably attached to each track 2, immediately behind the rear wheels of the vehicle, as shown in Figure 1, and as closely to that rear wheel as the arrangement of holes 4 will allow. Assuming that the tyre 20 of the rear wheel is not now abutting on the tube 8, the rod 16 is manually swung forwards around the tube 8, using a tommy bar inserted in a bore 17 if necessary, until the rod 16 has come to abut against the tyre 20, the pawl 13 riding over the ratchet ring 12, against which it is held by means of a helical tension spring 18 acting between pins 19 fixed respectively to the pawl 13 and to the arm 15.  Then, if necessary, two identical chock devices are releasably attached to the tracks 2 and applied to the tyres of the front wheels of the motor car 3 and, again if necessary, the motor car 3 is tensioned down against the track 2 by a conventional tying-down system.

After transportation of the motor car 3 and arrival at the delivery point, the chock device 5 is released by inserting the tommy bar into one of the holes 17 and then using the tommy bar to turn the rod 16 forwards about the tube 8 to an extent sufficient to allow the pawl 13 to be disengaged from the ratchet ring 12 by the manual application of a downward force to the outer end of the pawl 13 and then swinging the rod 16 rearwards about the tube 8 while maintaining the pawl 13 disengaged from the ratchet ring 12.  Upon removal of the downward force on the outer end of the pawl 13, the pawl 13 re-engages with the ratchet ring 12 under the action of the spring 18.  The chock device 5 can now be detached from the track 2 by depressing its spring-loaded rods with bent-over lower ends and then turning them through 90$^{\circ}$ to release them from the holes 4.

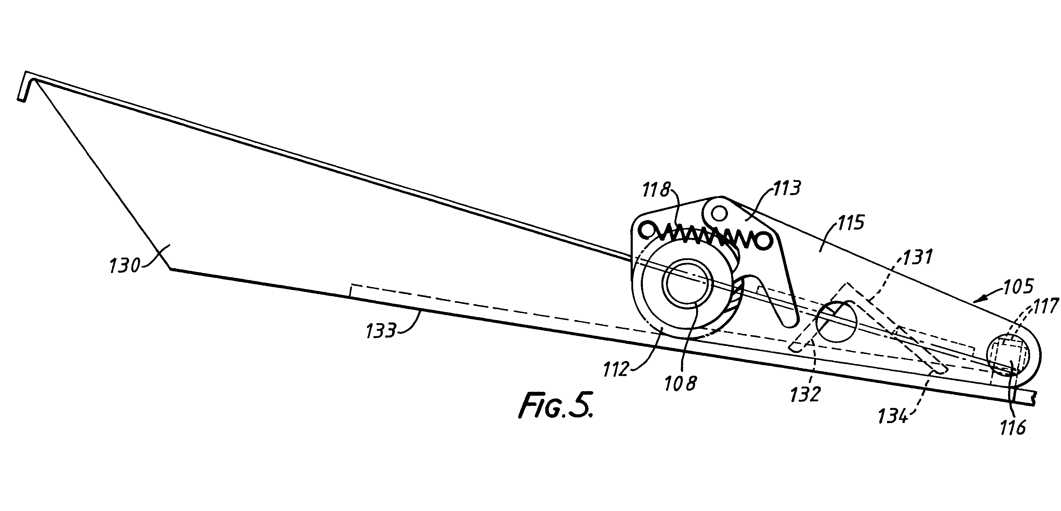

Figures 4 and 5 show the chock device applied to an extension pan of a stacking ramp of the vehicle transporter.  One of the two tracks 102 of the stacking ramp is seen in Figure 4 and it is again provided with oblong holes 104.  At its raisable end, the track 102 has releasably mounted thereon in a conventional manner utilising the holes 104 an extension pan 130. Incorporated in the extension pan 130 is a chock device 105 including two horizontal stub tubes 108 welded to the respective outer sides of the pan 130.  Welded to the outer end of the outer stub tube 108 is a ratchet ring 112 which co-operates with a pawl 113 held against the ring 112 by a helical tension spring 118. The pawl 113 is mounted on an outer arm 115 turnable around the outer stub tube 108. In the radially outer end of the arm 115 is fixed a stub rod 116 formed with diametral bores 117. Interconnecting the arm 115 and a corresponding arm on the inner stub tube is an angle iron 131 of which a forward limb 132 is inclined more steeply to the base 133 of the pan 130 than is the other limb 134.

The method of use of the arrangement shown in Figures 4 and 5 is as follows. As the car is driven up the stacking ramp, its relevant front wheel rides up the limb 134 of the angle iron 131 and then drops down over the limb 132 into the pan 130 and is there retained by application of the hand brake. If the car starts to roll back down the ramp, the steeply inclined limb 132 of the angle iron 131 helps to prevent this. However, with the wheel in the pan 130 spaced a short distance forward from the limb 132, the angle iron 131 and the arms welded thereto can be turned forwards about the stub tubes 108 until the angle iron 131 has come to abut the tyre of the wheel, whereupon the ratchet-and-pawl system 112, 113 hold the angle iron 131 in abutment with the tyre. At the delivery point, the chock device 105 can be released by inserting a tommy bar into one of the bores 117 and the angle iron 131 thereby pressed forwards around the stub tubes 108 sufficiently to allow the pawl 113 to be disengaged manually from the ratchet ring 112 against the action of the spring 118 and then the angle iron 131 and its arms 115 are swung rearwards until the limbs 132 and 134 arrive at the base 133 of the pan 130.

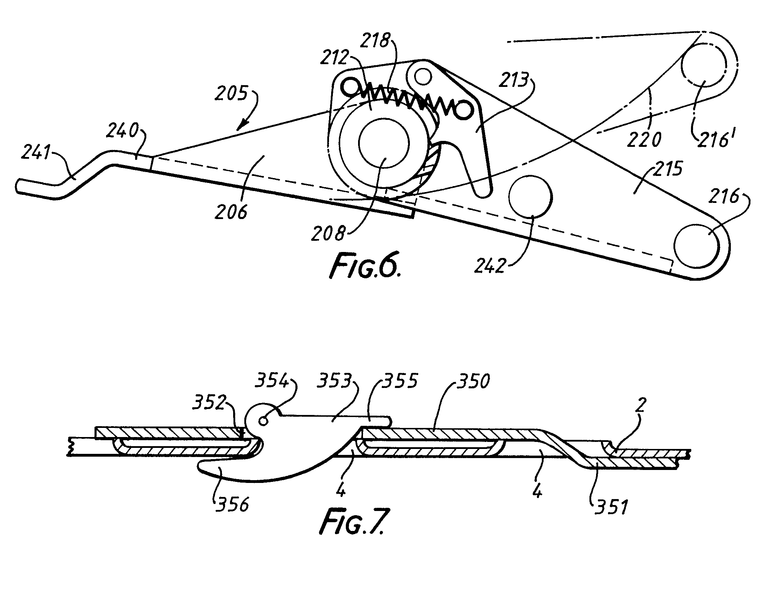

Figure 6 shows a version of the chock device usable at the very rear of the transporter. The chock device 205 includes two vertical end plates 206 interconnected by a base plate 240 provided with lugs 241 arranged to engage in respective holes 4 near the rearmost end of one of the rearmost tracks 2 of the transporter.    The rearmost edge of the base plate 240 may in fact actually overhang the rearmost extremity of that track.    The laterally outer plate 206 has fixed thereto a stub rod 208 to the outermost end of which is welded a ratchet ring 212 in which engages a pawl 213 under the action of a helical tension spring 218.    The pawl 213 is mounted on the laterally outer arm 215 of two arms interconnected by a horizontal stub rod 216.    The rod 216 may serve to support the front end of a loading ramp for the transporter.    If desired, the rod 216 may extend the whole width of the motor car 3, as may the base plate 240.    Each of the arms, such as 215, to which the rod 216 is fixed may be formed with horizontal, aligned bores 242 for receiving another rod either to support the loading ramp or to enable the tyred ground wheel to cross more smoothly from the loading ramp to the base plate 240.    Figure 6 shows in dot-dash lines a position 216' of the rod 216 in which it abuts against the tyre 220 of the ground wheel.

A reliable and yet simple system for releasably attaching the chock device to the track 2 is illustrated in Figure 7.    The device includes a base plate 350 having near each lateral end a forwardly projecting lug 351 and a slot 352 associated with a latching member 353.    Each slot 352 extends longitudinally of the track 2 and the member 353 lies in the vertical plane of the slot.    Fixed to the plate 350 and across the slot 352 is a horizontal pin 354 pivotally mounting the member 353.    The member 353 is turnable between a released position in which it lies with a lug 355 on top of the plate 350 rearwards of the pin 354 and a latching position shown in Figure 7 in which the lug 355 rests on top of the plate 350 forwards of the slot 352.    With each lug 351 inserted through a forward hole 4 in the track 2, and each slot 352 positioned over a rearward hole 4, each member 353 can be turned into the rearward hole 4 until the lug 355 under gravity abuts the plate 350 forwards of the slot 352, when the tip of a tongue 356 of the member 353 engages beneath the rearward edge of the relevant hole 4 and the base of the tongue occupies almost all of the dimension of the hole 4 longitudinally of the track as illustrated in Figure 7, whereby the chock device is securely attached to the track, yet can be readily released therefrom by first simply turning back each latching member 353.

CLAIMS:

1. A chock device (5) for mounting so as to extend transversely of track means (2) and in the path of a ground wheel (20) of a wheeled vehicle which ground wheel (20) is borne by said track means (2), said device (5) including a stop member (16) arranged to abut the outer periphery of said ground wheel (20), a second member (6-8) so mounting said stop member (16) that said stop member (16) is movable into and out of abutment with said outer periphery while said second member (6-8) is in a condition fixed relative to said track means (2), and a ratchet-and-pawl arrangement (12, 13) serving releasably to prevent movement of said stop member away from said outer periphery, characterised in that the stop member (16) is movable into and out of abutment with said outer periphery by turning about an axis, and one part (13) of the ratchet-and-pawl arrangement (12, 13) is arranged to turn about that axis relative to the other part (12).

2. A chock device according to claim 1, wherein the teeth of said ratchet (12) are arranged along a circular arc concentric with said axis, and said one part (13) is the pawl (13).

3. A chock device according to claim 1 or 2, wherein a spring mounted at one end on said one part (13) urges said one part (13) into engagement with said other part (12).

4. A chock device acording to any preceding claim, wherein said stop member (16) is a transverse bar (16) for abutting a tyre (20) of the ground wheel.

5. A chock device according to any preceding claim, wherein said stop member (16) is pivotally supported on said second member (6-8) by way of first and second arms (15) extending transversely of the stop member (16) at respective opposite ends of the stop member (16).

6. A chock device according to any preceding claim, wherein those flanks of the teeth of said ratchet (12) which are engaged by said pawl (13) to prevent turning of said stop member (16) out of abutment with said ground wheel (20) define respective acute angles with the line of the teeth of the ratchet (12).

7. A chock device according to any preceding claim, wherein said stop member (16) has associated therewith means (17) for temporarily receiving an elongate member for use as a lever for releasing said one part (13) from said other part (12).

8. A chock device according to any preceding claim, and further comprising releasable latching members movably mounted on said second member (6-8) for insertion through, and engagement below the edges of, holes (4) through said track means (2).

9. A chock device according to claim 8, wherein said latching members are of hooked form and are mounted for turning about axes substantially parallel to the planes of the holes (4).

10. A chock device (5) for mounting so as to extend transversely of track means (2) and in the path of a tyre (20) of a ground wheel of a wheeled vehicle (3) which tyre (20) is borne by said track means (2), said device (5) including a stop member (16) arranged to abut the outer periphery of said tyre (20) and a second member (6-8) so mounting said stop member (16) that said stop member (16) is movable into and out of abutment with said outer periphery while said second member (6-8) is in a condition fixed relative to said track means (2), characterized in that said stop member (16) is a transverse bar (16).

1/4    0168925

Fig.1.

Fig.2.

0168925

FIG.3.

FIG.4.

FIG.5.

**Fig.6.**

**Fig.7.**

**European Patent Office**

**EUROPEAN SEARCH REPORT**

Application number

EP 85 30 3513

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 284 481 (BARONNET) * Page 1, lines 26-41; figures 1,2 * | 1,4,5 | B 60 P 7/08 B 60 T 3/00 |
| X | | 10 | |
| | --- | | |
| A | US-A-4 212 211 (RICKERT) * Column 2, lines 24-30,61-68; figure 3 * | 1-3 | |
| | --- | | |
| A,D | FR-E- 79 785 (SOCIETE NOUVELLE DES ATELIERS DE VENISSIEUX) * Page 1, right-hand column, lines 14-18; page 2, left-hand column, line 31 - right-hand column, line 17; figures 3,4 * | 1 | |
| | --- | | TECHNICAL FIELDS SEARCHED (Int. Cl.4) |
| A | US-A-4 227 633 (SELLBERG) * Column 2, lines 2-6,30-34; figure 6 * | 8,9 | B 60 P 7/00 B 60 T 3/00 G 05 G 5/00 |
| | ----- | | |

The present search report has been drawn up for all claims

| Place of search | Date of completion of the search | Examiner |
|---|---|---|
| THE HAGUE | 19-07-1985 | OSBORNE J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82